# EUROPEAN PATENT SPECIFICATION

(11) **EP 1 752 111 B1**
(45) Date of publication and mention of the grant of the patent: **21.05.2008**
(21) Application number: 06015909.2
(22) Date of filing: 31.07.2006
(51) Int. Cl.: A61D 7/04, A01K 1/03

(54) **Anesthetizing chamber and microscope apparatus**
Narkosebox und Mikroskop
Chambre d'anesthésie et microscope

(30) Priority: 08.08.2005 JP 2005229475
(43) Date of publication of application: 14.02.2007
(73) Proprietor: Olympus Corporation, Tokyo 151-0072 (JP)
(72) Inventor: Tsuyuki, Kei, Hachioji-shi, Tokyo 192-0045 (JP); Tanikawa, Yoshihisa, Tokyo 103-0013 (JP); Kawano, Yoshihiro, Tokyo 192-0916 (JP)
(74) Representative: von Hellfeld, Axel

(56) References cited:
- WO-A-20/04062523
- US-A1- 2003 187 344
- US-A1- 2003 209 244

## Description

### BACKGROUND OF THE INVENTION

### 1. FIELD OF THE INVENTION

This invention relates to an anesthetizing chamber and microscope apparatus used during microscopic observation of a specimen such as a small laboratory animal *in vivo.*

### 2. DESCRIPTION OF RELATED ART

Inhalant anesthesia machines for use with small laboratory animals have been developed in order to maintain the animal in a live state without causing pain when performing *in vivo* observation of a specimen such as the small laboratory animal. In these inhalant anesthesia machines, the nose and mouth of the mouse is covered with a bag-like inhalation device, and the small laboratory animal is placed in a somnolent, or anesthetized, state by supplying anesthetic gas into the inhalation device. (See S.A. Techno K.K., Yuzuru KURABAYASHI, Research Related to the Development of Inhalant Anesthesia Apparatuses for Small Laboratory Animals, Okayama University, Internet URL: http://www.chugoku.meti.go.jp/topics/sangakukan/jirei/2-11.pdf (June 7, 1995).)

However, in such conventional inhalant anesthesia machines, it is difficult to achieve a complete seal of the space that is formed between the inhalant device and the small laboratory animal's nose and mouth. As result, when observations are carried out over a long period of time while maintaining the animal in an anesthetized state, an undesirable situation results in which anesthetic gas leaks from this space.

Another system for anesthetizing laboratory animals is described in United States Patent Application Publication No. 2003/0209244 A1 upon which prior art the two part form of claim 1 is based. The International Patent Application Publication No. WO 2004/062523 A1 describes a tank system for heavy gas.

### BRIEF SUMMARY OF THE INVENTION

The present invention was conceived in view of the above-described circumstances and has as its objective the provision of an anesthetizing chamber and microscope apparatus in which the leakage of anesthetic gas is prevented, and with which it is possible to observe a specimen such as a small laboratory animal *in vivo* over a long period of time.

In order to achieve the above objective, the present invention provides a microscope apparatus as defined in claim 1. Preferred features of the invention are recited in the dependent claims.

The present invention includes an anesthetizing chamber comprising a chamber main body for housing a specimen such as a small laboratory animal, an anesthetic gas supply part for supplying anesthetic gas into the chamber main body, and an anesthetic gas recovery part for recovering the anesthetic gas supplied into the chamber main body by the anesthetic gas supply part, wherein a transparent window is provided to at least one portion of the chamber main body.

Thus, a specimen such as a laboratory animal is housed inside the chamber main body, and anesthetic gas is supplied into the chamber main body by activation of the anesthetic gas supply part. As a result, the specimen can be maintained in an anesthetized state. Since a transparent window is provided to the main body of the case, it is possible to observe the specimen via this window using an optical observing means such as a microscope. In this case, since the specimen is housed in the chamber main body, it is possible to prevent leakage of the anesthetic gas into the surrounding environment, and to maintain the specimen in an anesthetized state over a relatively long period of time. When releasing the specimen from the anesthetized state once observations are completed, the anesthetic gas supplied into the main body of the case can be recovered by operating the anesthetic gas recovery part. As a result, there is no anesthetic gas remaining inside the main body of the case following recovery, so that anesthetic gas does not leak into the surrounding environment even when the lid is removed.

Alternatively, the anesthetizing chamber comprises a chamber main body for housing a specimen such as a laboratory animal and an observation device for observing the specimen, an anesthetic gas supply part for supplying an anesthetic gas into the chamber main body, and an anesthetic gas recovery part for recovering the anesthetic gas that leaks into the chamber main body.

By housing a specimen such as a laboratory animal, and an observation device for observing this specimen, inside the chamber main body, and supplying the anesthetic gas into the chamber main body by activating the anesthetic gas supply part, it is possible to carry out observations of the specimen while maintaining the specimen in the anesthetized state. In this situation, by housing the specimen inside the chamber main body, it is possible to prevent the leakage of anesthetic gas into the surrounding environment, and maintain the specimen in an anesthetized state over a relatively long period of time. In addition, since the observation device is housed inside the chamber main body along with the specimen, it is possible to bring the objective lens into contact with the specimen, penetrate the body of the specimen with a needle, or otherwise carry out observations of the specimen *in vivo.* Further, when releasing the specimen from the anesthetized state upon completion of observations, the anesthetic gas supplied into the chamber main body is recovered by activation of the anesthetic gas recovery part. Accordingly, following this recovery, there is no anesthetic gas remaining inside the chamber main body. Thus, it is possible to prevent leakage of the anesthetic gas into the surrounding environment even if the lid is opened.

In this aspect of the present invention, the observation device is a fluoroscopy device for observing fluorescent light emitted from the specimen. It is preferable that the chamber main body be composed of a light-blocking member that blocks incidence of light from the outside that is in the fluorescent light wavelength region.

By providing this design, the fluorescent light emitted by the specimen can be observed using the observation device. In this case, since the chamber main body is comprised of a light-blocking member, the incidence of extraneous light in the fluorescent light wavelength region on the chamber main body is prevented. Accordingly, the only light in the fluorescent light wavelength region comes from the specimen, and the observed image is prevented from becoming obscured due to extraneous light.

Further, in the above invention, the anesthetic gas recovery part may be provided with a suction device for suctioning the gas inside the chamber main body, and an adsorbent which adsorbs the anesthetic gas component as the gas is drawn through the adsorbent by the suction device.

In this way, the gas inside the case is suctioned by the action of the suction device, and is passed through the adsorbent. As a result, the anesthetic gas component that is included in the gas is effectively adsorbed by the adsorbent. Accordingly, once the action of the anesthetic gas recovery part is completed, it is possible to prevent leakage of anesthetic gas into the surrounding environment, even if the chamber main body is opened.

The present invention provides the effect of preventing the leakage of anesthetic gas, and enables observations of a specimen such as a small laboratory animal to be carried out *in vivo* over a long period of time.

### BRIEF DESCRIPTION OF THE SEVERAL VIEWS OF THE DRAWINGS

FIG. 1 is a perspective view showing the anesthetizing chamber according to a first embodiment of the present invention.
FIG. 2 is a complete structural view showing the observation device for carrying out observations with the specimen housed in the anesthetizing chamber in FIG. 1.
FIG. 3 is a schematic view showing the anesthetizing chamber according to a second embodiment of the present invention.
FIG. 4 is a schematic view showing a variation of the anesthetizing chamber in FIG. 3.
FIG. 5 is a schematic view showing the case where the anesthetic gas recovery part has been disposed to the outside of the anesthetizing chamber in FIG. 3.
FIG. 6 is a schematic view showing the anesthetizing chamber with an attached sterilization device.

### DETAILED DESCRIPTION OF THE INVENTION

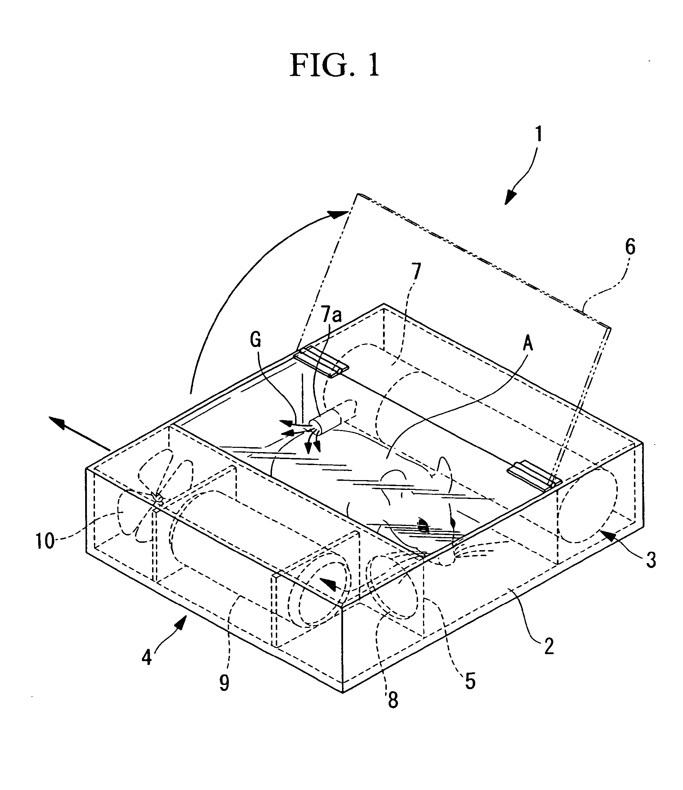

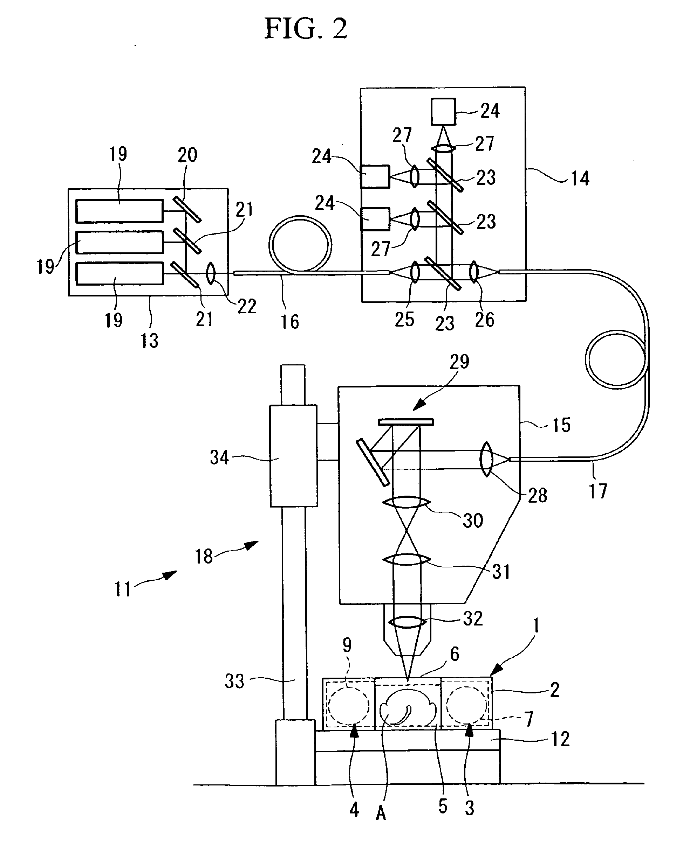

The anesthetizing chamber 1 according to a first embodiment of the present invention will now be explained with reference to FIGS. 1 and 2.

As shown in FIG. 1, the anesthetizing chamber according to this embodiment comprises a chamber main body 2 for housing a specimen A such as a laboratory animal; an anesthetic gas supply part 3 for supplying anesthetic gas G to the chamber main body 2; and an anesthetic gas recovery part 4 for recovering the anesthetic gas G that is supplied into the chamber main body 2 from the anesthetic gas supply part 3.

The inside of the chamber main body 2 is partitioned into a specimen housing 5 for housing the specimen A, an anesthetic gas supply part 3, and an anesthetic gas recovery part 4. A lid (window) 6 that can be opened and closed is provided to at least the specimen housing 5. Specimen A can be placed in or removed from the specimen housing 5 when the lid 6 is open.

The lid 6 of the specimen housing 5 is comprised of a plate that is made of a transparent material. As a result, even if the lid 6 is closed, it is possible to observe conditions inside the specimen housing 5 from the outside.

The anesthetic gas supply part 3 houses an anesthetic gas cylinder 7 disposed so that its spray hole 7a is directed from the wall between the specimen housing 5 and the anesthetic gas supply part 3, toward the specimen housing 5 side.

The anesthetic gas recovery part 4 is provided with a filter 9 through which the anesthetic gas G passes after flowing from the specimen housing 5 via a penetrating hole 8 that is provided in the wall between the anesthetic gas recovery part 4 and the specimen housing 5; and a fan 10 for drawing the anesthetic gas G toward the filter 9. The outer wall of the chamber main body 2 facing the fan 10 is open to the outside air.

In order to observe a specimen A such as a small laboratory animal *in vivo* using the anesthetizing chamber 1 according to this embodiment, configured as above, the lid 6 of the specimen housing 5 of the chamber main body 2 forming this anesthetizing chamber 1 is opened, the specimen A is housed inside the specimen housing 5, and the lid 6 is then closed. As a result, the specimen housing 5 is tightly closed. The anesthetic gas cylinder 7 is then operated under this condition, and the anesthetic gas G is blown out from the spray hole 7a into the specimen housing 5. As a result, the specimen A is placed in an anesthetized state due to inhalation off the anesthetic gas G. Thus, as shown in FIG. 2, specimen A is placed on top of a stage 12 of the observation device 11 of each anesthetizing chamber 1.

The observation device 11 of FIG. 2 is, for example, a laser-scanning fluoroscopy device such as a laser-scanning fluorescence microscope, and is connected to a laser light source 13, a detecting unit 14, and an observing head 15 by optical fibers 16 and 17. The observing head 15 is fixed in place to a stand 18 that can be moved vertically. The laser light source 13 is provided with a plurality of light sources 19 that can emit laser light of a variety of wavelengths, a mirror 20 for multiplexing the laser light emitted from these light sources 19, and a dichroic mirror 21. Further, this multiplexed light incidents onto one end of the optical fiber 16 by means of a coupling lens 22.

The detecting unit 14 is provided with a plurality of dichroic mirrors 23 that split the fluorescent light at each wavelength, and a plurality of optical detectors 24 for detecting the split fluorescent light. Numeric symbol 25 indicates a collimating lens for converting the laser light into roughly parallel light. Numeric symbol 26 indicates a coupling lens that incidents laser light onto one end of the optical fiber 17. Numeric symbol 27 is a converging lens for converging the fluorescent light onto the optical detector 24.

The observing head 15 is provided with a collimating lens 28 for rendering the laser light propagated from the optical fiber 17 into roughly parallel light; a scanner 29 for two-dimensional scanning of the laser light that has been rendered roughly parallel; a pupil-projection lens 30 which converges the scanned laser light and forms an intermediate image; an image-forming lens 31 which converts the converged laser light into roughly parallel light; and an objective lens 32 which radiates the laser light made roughly parallel onto specimen A.

Stand 18 is provided with a support column 33 that extends vertically, and a slider 34 which is provided to enable movement vertically along this support column 33, and to fix the observing head 15 in place. The slider 34 can be fixed at an optional position along the vertical direction of the support column 33. In addition, an angle adjusting mechanism (omitted from the figure) may be provided to the slider 34 for changing the angle of inclination of the observing head 15.

The stage 12 on which the anesthetizing chamber 1 is mounted is provided in a manner to enable movement in the horizontal direction, and is designed to move the anesthetizing chamber 1 with respect to the objective lens 32 of the observing head 15 in the direction that is perpendicular to the optical axis of the objective lens 32, and position it at an optional position.

By disposing the anesthetizing chamber 1 mounted on the stage 12 so that the lid 6 is directed upward, laser light can be made to incident through the transparent lid 6 into the specimen housing 5 from above, radiating laser light onto the anesthetized specimen A. When specimen A is irradiated with laser light, the fluorescent material contained in the specimen is excited by the laser light and emits fluorescent light. The emitted fluorescent light returns via the same pathway as the laser light, passing through the objective lens 32, the image-forming lens 31, the pupil-projection lens 30, the scanner 29, the collimating lens 28 and the optical fiber 17, and is separated from the laser light by dichroic mirror 23 of the detecting unit 14.

The fluorescent light separated from the laser light is further separated into respective wavelengths as a result of passing through multiple dichroic mirrors 23, and these are detected by respective light detectors 24. These light detectors 24 are, for example, photomultiplier tubes, and can output fluorescence luminance information. Accordingly, by correlating the luminance data output from each of the light detectors 24 and the scanning position of scanner 29, a two-dimensional fluorescent light image can be formed.

In the anesthetizing chamber according to this embodiment, the specimen housing 5 is sealed, and the anesthetic gas G from the anesthetic gas cylinder 7 is blown into this specimen housing 5. The sprayed anesthetic gas G is sealed inside the specimen housing 5 of the chamber main body 2. As a result, leakage of the anesthetic gas G into the surrounding environment can be prevented, and the specimen A can be maintained in an anesthetized state over a relatively long period of time.

Since a lid 6 consisting of a transparent material is provided to the specimen housing 5 of the chamber main body 2, it is possible to carry out *in vivo* observations of the anesthetized specimen A disposed inside the specimen housing 5 even when the lid 6 is closed and the specimen housing 5 is tightly sealed, by bringing the objective lens 32 into contact from the outside of the lid 6.

When spraying in a new anesthetic gas G, the anesthetic gas G which was used inside the specimen housing 5 is drawn off by activating the anesthetic gas recovery part 4, and can be released into the atmosphere after adsorption of the anesthetic gas component by a filter 9. As a result, it is possible to prevent leakage of the anesthetic gas G outside the anesthetizing chamber 1, while at the same time supplying a new anesthetic gas G into the specimen housing 5, thereby making it possible to maintain the anesthetized state of the specimen A over an even longer period of time.

Once observations are completed, the specimen A is released from the anesthetized state, and the anesthetic gas recovery part 4 is activated. As a result, the anesthetic gas G supplied into the chamber main body 2 is adsorbed by the filter 9 and recovered. Thus, since the anesthetic gas G is no longer present inside the chamber main body 2 after this recovery, it is possible to prevent leakage of the anesthetic gas G into the surrounding environment even if the lid 6 is opened.

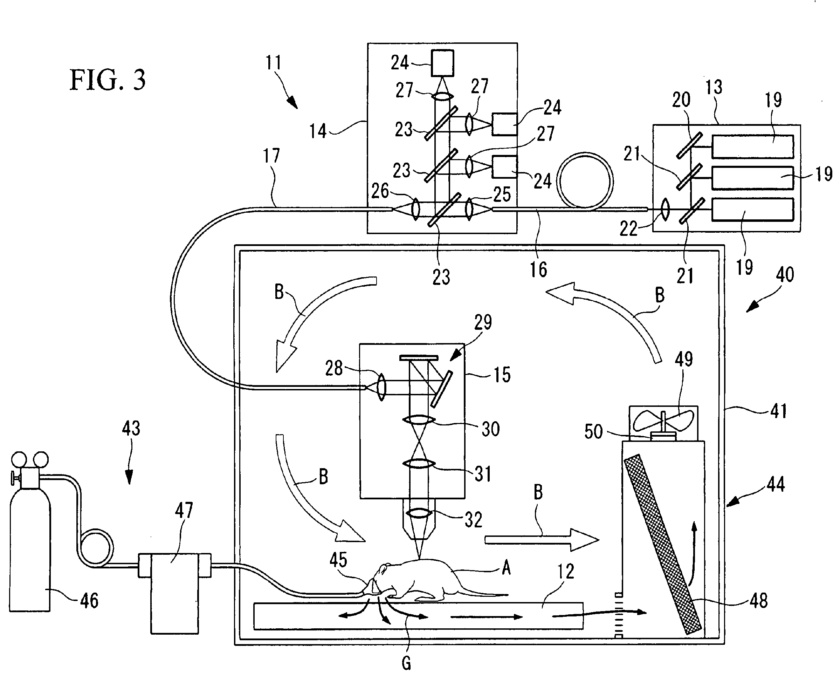

Next, the anesthetizing chamber 40 according to a second embodiment of the present invention will be explained with reference to FIG. 3.

Note that in the following explanation, the same numeric symbols have been applied to parts that are equivalent to the structures of the anesthetizing chamber 1 according to the first embodiment explained above, and an explanation thereof is omitted here.

As shown in FIG. 3, the anesthetizing chamber 40 according to this embodiment comprises with a chamber main body 41 for housing a specimen A or other laboratory animal and an observation device 11 for observing the specimen A in an airtight manner; an anesthetic gas supply part 43 for supplying an anesthetic gas G into the chamber main body 41; and an anesthetic gas recovery part 44 for recovering the anesthetic gas G that leaks into the chamber main body 41.

The observation device 11 is a laser-scanning fluoroscopy device identical to that shown in FIG. 2, with only the observing head 15 housed inside the chamber main body 41. The observing head 15 is fixed to a stand 18, not shown, that is identical to that described above, and that is designed to enable three dimensional movement and variation in the alteration of the angle of inclination of the objective lens 32 with respect to the specimen A.

The anesthetic gas supply part 43 is provided with an inhalation device 45 which is attached to the head of the specimen A; a gas cylinder 46 that houses the anesthetic gas G sent to the inhalation device 45; and a vaporizer 47 that vaporizes the anesthetic gas G sent from the gas cylinder 46. The anesthetic gas G sent from the gas cylinder 46 is vaporized by the vaporizer 47, and sent to the inhalation device 45, thereby continuously supplying the anesthetic gas G to the specimen A.

The anesthetic gas recovery part 44 is provided with an activated charcoal filter (adsorbent) 48 that is disposed inside the chamber main body 41, and a fan (intake means) 49 that generates an air current inside the chamber main body 41 so that the anesthetic gas G, which has a tendency to linger at the bottom of the chamber main body 41, passes through the activated charcoal filter 48. The numeric symbol 50 indicates a motor for rotating the fan 49. By generating an air current as indicated by arrow B inside the chamber main body 41 through the activation of the fan 49, this air current B is passed through the activated charcoal filter 48, with the result that the anesthetic gas component is adsorbed by the activated charcoal filter 48.

In the anesthetizing chamber 40 according to this embodiment as described above, a specimen A such as a laboratory animal, and an observing head 15 for observing this specimen A, are housed inside the chamber main body 41. By supplying an anesthetic gas G into the chamber main body 41 by activating the anesthetic gas supply part 43, observations of the specimen A can be carried out using the observing head 15 while maintaining the specimen A in an anesthetized state. By housing the specimen A inside the chamber main body 41 in this way, even if the anesthetic gas G leaks from between the inhalation device 45 and the specimen A, it remains inside the chamber main body 41, so that leaking of the anesthetic gas into the surrounding environment can be prevented. Accordingly, the specimen A can be maintained in an anesthetized state over a relatively long period of time.

Since the specimen A is housed along with the observing head 15 inside the chamber main body 41, it is possible to make observations of the specimen A *in vivo* by bringing the objective lens 32 into contact with the specimen A, inserting the objective lens 32 inside the body of the specimen A, etc.

When releasing the specimen A from the anesthetized state upon completion of observations, a current B can be generated inside the chamber main body 41 by activating the anesthetic gas recovery part 44, so that the anesthetic gas G remaining inside can be recovered. Thus, after recovery, there is no further anesthetic gas G remaining inside the chamber main body 41. Accordingly, leakage of the anesthetic gas G into the surrounding environment can be prevented, even if the chamber main body 41 is opened.

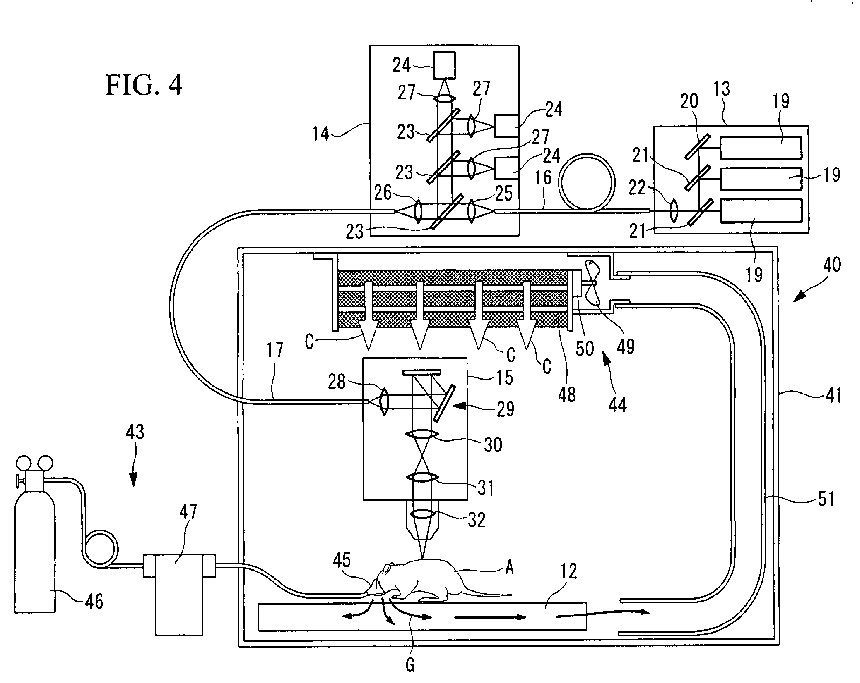

Note that in the above embodiment, an activated charcoal filter 48 is disposed to the bottom of the chamber main body 41, and air from which the anesthetic gas component has been adsorbed is released into the upper part of the chamber main body 41. However, in place of this arrangement, it is also acceptable to dispose the activated charcoal filter 48 to the top part of the chamber main body 41, and draw off the anesthetic gas G remaining in the bottom part of the chamber main body 41 toward the activated charcoal filter 48 using a duct 51, as shown in FIG. 4. In this case, a descending current C, comprised of clean air following adsorption of the anesthetic gas G by the activated charcoal filter 48 can be formed inside the chamber main body 41. As a result, it is possible to prevent incorporation of dust, etc., and to maintain a clean state inside the chamber main body 41.

In the anesthetizing chamber 40 according to this embodiment, it is preferable that the chamber main body 41 be formed of a light-blocking member that blocks the incidence of light in the fluorescent light wavelength region from the outside. As a result, when the fluorescent light emitted by the specimen A is observed using the observation device 11, the incidence of light in the fluorescent light wavelength region from outside on the chamber main body 41 is prevented. Thus, the only light in the fluorescent wavelength region is from the specimen A, so that it is possible to prevent the observed image from becoming obscured due to extraneous light.

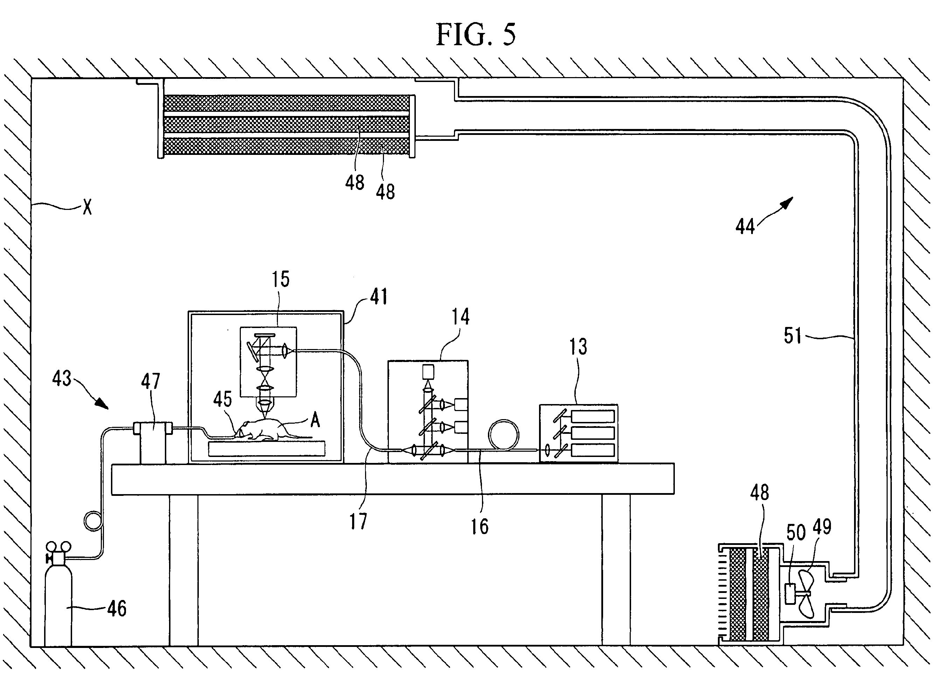

An anesthetic gas recovery part 44 was provided to the chamber main body 41 in this embodiment, however, it is also acceptable to provide an anesthetic gas recovery part 44 inside the observation room X in which the anesthetizing chamber 40 according to this embodiment is disposed, as shown in FIG. 5.

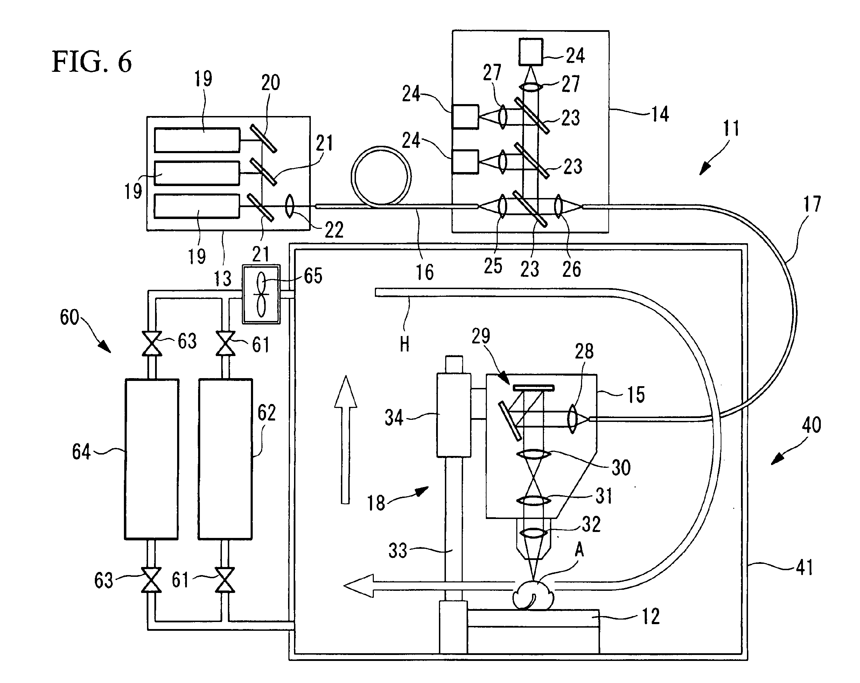

In addition, as shown in FIG. 6, it is also acceptable to provide a sterilizing device 60 to the chamber main body 41. Conceptually, this sterilizing device 60 is one provided with a formalin gas generating device 62 which can be opened or closed using a valve 61; a gas neutralizing device 64 which can be opened or closed using a valve 63; and a fan 65 for supplying formalin gas H into or drawing off formalin gas H from the chamber main body 41. The gas neutralizing device 64 is, for example, a catalytic device such as platinum.

Upon completion of observations, the formalin gas generalizing device 62 is activated, and, with valve 63 shut, valve 61 is opened. The fan 65 is then operated, so that formalin gas H is supplied into the chamber main body 41, sterilizing it. Following sterilization, valve 61 is closed and valve 63 is opened. The formalin gas H inside the chamber main body 41 is then guided into the gas neutralizing device 64 and neutralized. As a result, the inside of the chamber main body 41 is sterilized and detoxified, making it possible to open the chamber main body 41 and perform operations, and to prevent cellular contamination between specimens A and other such undesirable situations. Note that sterilizing device 60 is not limited to a sterilizing device using formalin H. Rather, it is also acceptable to use an ion sterilization device or an ultraviolet sterilization device, as well.

## Claims

1. A microscope apparatus comprising:
an observation device (11, 15); and
an anesthetizing chamber (1; 40) including:
a chamber main body (2; 41) for housing a specimen (A), such as a laboratory animal,
an anesthetic gas supply part (3; 43) for supplying an anesthetic gas to said chamber main body (2; 41), and
an anesthetic gas recovery part (4; 44) for recovering the anesthetic gas that leaks into said chamber main body (2; 41);
**characterized in that** the observation device (11, 15) is arranged for observation of the specimen (A) housed within the chamber main body (2; 41) of the anesthetizing chamber (1; 40).

2. A microscope apparatus according to claim 1, wherein said observation device (15) is housed within the chamber main body (41) of the anesthetizing chamber (40).

3. A microscope apparatus according to claim 1 or claim 2, wherein said observation device (11) is a fluoroscopy device for observing fluorescent light emitted from the specimen (A), and said chamber main body (2; 41) is composed of a light-blocking member for blocking the incidence of light in the fluorescent light wavelength region from the outside.

4. A microscope apparatus according to any one of claims 1 to 3, wherein said anesthetic gas recovery part (4; 44) is provided with a suction device (10; 49) for drawing off the gas inside the chamber main body (2; 41), and an adsorbent (9; 48) through which the gas drawn off by said suction device (10; 49) is passed, for adsorbing the anesthetic gas component.

5. A microscope apparatus according to claim 1 comprising a sterilization device (60) for sterilizing the inside of said anesthetizing chamber.

## Patentansprüche

1. Eine Mikroskopvorrichtung, aufweisend:
eine Beobachtungsvorrichtung (11, 15); und
eine Narkosebox (1; 40), die aufweist:
einen Boxhauptkörper (2; 41) zur Aufnahme einer Probe (A), beispielsweise eines Labortiers,
ein Narkosegaszufuhrteil (3; 43) zur Zufuhr eines Narkosegases zu dem Boxhauptkörper (2; 41), und
ein Narkosegasrückgewinnungsteil (4; 44) zur Rückgewinnung von Narkosegas, das in den Boxhauptkörper (2; 41) austritt,
**dadurch gekennzeichnet, dass** die Beobachtungsvorrichtung (11, 15) zur Beobachtung der Probe (A) angeordnet ist, die in dem Boxhauptkörper (2; 41) der Narkosebox (1; 40) aufgenommen ist.

2. Eine Mikroskopvorrichtung nach Anspruch 1, bei der die Beobachtungsvorrichtung (15) innerhalb der Boxhauptkörpers (41) der Narkosebox (40) aufgenommen ist.

3. Eine Mikroskopvorrichtung nach Anspruch 1 oder 2, bei der die Beobachtungsvorrichtung (11) eine Fluoroskopievorrichtung zur Beobachtung von von der Probe (A) emittiertem Fluoreszenzlicht ist und der Boxhauptkörper (2; 41) aus einem Licht blockierenden Bauteil aufgebaut ist, um Lichteinfall von außen in den Fluoreszenzlichtwellenlängenbereich zu unterbinden.

4. Eine Mikroskopvorrichtung nach einem der Ansprüche 1 bis 3, bei der das Narkosegasrückgewinnungsteil (4; 44) mit einer Absaugvorrichtung (10; 49), um Gas aus dem Inneren des Boxhauptkörpers (2; 41) abzusaugen und einem Adsorbens (9; 48) versehen ist, durch welches von der Absaugvorrichtung (10; 49) abgesaugtes Gas geführt wird, um die Narkosegaskomponente zu adsorbieren.

5. Eine Mikroskopvorrichtung nach Anspruch 1, aufweisend eine Sterilisationsvorrichtung (60) zur Sterilisation des Inneren der Narkosebox.

## Revendications

1. Microscope comprenant :
un dispositif d'observation (11,15) ; et
une chambre d'anesthésie (1 ; 40) incluant :
un corps principal de chambre (2 ; 41) pour recevoir un spécimen (A), tel qu'un animal de laboratoire,
une partie d'amenée de gaz anesthésiant (3 ; 43) pour amener un gaz anesthésiant dans ledit corps principal de chambre (2 ; 41), et
une partie de récupération de gaz anesthésiant (4 ; 44) pour récupérer le gaz anesthésiant qui fuit dans ledit corps principal de chambre (2 ; 41) ;
**caractérisé en ce que** le dispositif d'observation (11, 15) est agencé pour une observation du spécimen (A) reçu à l'intérieur du corps principal de chambre (2 ; 41) de la chambre d'anesthésie (1 ; 40).

2. Microscope selon la revendication 1, dans lequel ledit dispositif d'observation (15) est reçu à l'intérieur du corps principal de chambre (41) de la chambre d'anesthésie (40).

3. Microscope selon la revendication 1 ou la revendication 2, dans lequel ledit dispositif d'observation (11) est un dispositif de fluoroscopie pour observer une lumière fluorescente émise du spécimen (A), et ledit corps principal de chambre (2 ; 41) est composé d'un élément de blocage de la lumière pour bloquer l'incidence de la lumière dans la région de longueur d'onde de la lumière fluorescente provenant de l'extérieur.

4. Microscope selon l'une quelconque des revendications 1 à 3, dans lequel ladite partie de récupération de gaz anesthésiant (4 ; 44) est prévue avec un dispositif d'aspiration (10 ; 49) pour aspirer le gaz à l'intérieur du corps principal de chambre (2 ; 41), et un adsorbant (9 ; 48) à travers lequel le gaz aspiré par ledit dispositif d'aspiration (10 ; 49) est fait passer, pour adsorber le composant gaz anesthésiant.

5. Microscope selon la revendication 1, comprenant un dispositif de stérilisation (60) pour stériliser l'intérieur de ladite chambre d'anesthésie.
